Europäisches Patentamt

European Patent Office

Office européen des brevets

(11) Veröffentlichungsnummer: **0 199 334**
**A2**

(12) **EUROPÄISCHE PATENTANMELDUNG**

(21) Anmeldenummer: **86105517.6**

(22) Anmeldetag: **22.04.86**

(51) Int. Cl.⁴: **C08L 69/00 , C08L 55/02 ,**
**C08L 25/12 , C08L 33/16 ,**
**C08K 3/22 , C08K 9/08**

(30) Priorität: **25.04.85 DE 3514871**

(43) Veröffentlichungstag der Anmeldung:
**29.10.86 Patentblatt 86/44**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Muench, Volker, Dr.**
**Luitpoldstrasse 114**
**D-6700 Ludwigshafen(DE)**
Erfinder: **Wassmuth, Georg, Dr.**
**von-Sturmfeder-Strasse 60**
**D-6700 Ludwigshafen(DE)**
Erfinder: **Mitulla, Konrad, Dr.**
**Schwalbenweg 31**
**D-6700 Ludwigshafen(DE)**
Erfinder: **Echte, Adolf, Dr.**
**Leuschnerstrasse 42**
**D-6700 Ludwigshafen(DE)**
Erfinder: **Hambrecht, Juergen, Dr.**
**Am Klosterwald 31**
**D-4400 Muenster-Hiltrup(DE)**

(54) **Selbstverlöschende halogenhaltige thermoplastische Formmasse.**

(57) Die Erfindung betrifft eine selbstverlöschende halogenhaltige thermoplastische Formmasse, enthaltend,

A ein Polycarbonat,

B ein Mischpolymerisat das besteht aus

b₁) einem Elastomeren (Kautschuk) auf Basis von ausschließlich Butadien,

b₂) einer auf das Elastomere gepfropften Hülle aus i.w. einem S/AN-Co-polymerisat sowie

b₃) einem S/AN-Copolymerisat (Hartmatrix),

C Poly(pentabrombenzylacrylat) mit einem Erweichungsbereich von 205 bis 215°C als Flammschutzmittel

und

D 2 bis 10 Gew.% Antimonoxid als Synergist in Form eines Konzentrates in Polyethylen.
Die Formmasse wird vorzugsweise zur Herstellung von Formteilen verwendet.

EP 0 199 334 A2

Selbstverlöschende halogenhaltige thermoplastische Formmasse

Die Erfindung betrifft eine selbstverlöschende thermoplastische Formmasse auf der Grundlage von Styrol-und Acrylnitril enthaltenden, mit Dienen schlagzäh modifizierten Pfropfmisch-Polymerisaten (ABS), Polycarbonaten und Halogen enthaltenden Flammschutzmitteln sowie einem Synergisten für das Flammschutzmittel.

Zum Stand der Technik nennen wir:

(1) DE-PS 11 70 141

(2) DE-PS 18 10 993

(3) DE-OS 31 49 358

(4) DE-OS 32 10 284

(5) deutsche Patentanmeldung P 32 45 292.6

(6) deutsche Patentanmeldung P 34 14 119.7 und

(7) deutsche Patentanmeldung P 34 36 815.9

Mischungen aus Polycarbonaten(PC) und Styrol-und Acrylnitril enthaltenden schlagzähen Polymerisaten (ABS) sind in (1) und (2) beschrieben. Diese bekannten Formmassen besitzen im allgemeinen zufriedenstellende Eigenschaften. Die 2-stufige Pfropfung von ASA-Polymerisaten ist aus (3) bekannt und in (5) sind Mischungen aus ASA-Polymerisaten, die eine 2-stufige Pfropfhülle aufweisen, und Polycarbonaten beschrieben. Die in (4) beschriebene Masse aus PC und ASA weist zusätzlich ein Acrylatcopolymerisat auf.

In (6) sind Mischungen aus PC und ASA beschrieben, wobei die Pfropfung des Acrylatkautschuks 2stufig erfolgt und zusätzlich zu Styrol und AN beim Aufbau der Pfropfhülle Methylmethacrylat verwendet wird.

In (7) wird das Prinzip der Mehrfachpfropfung - schließlich auch für PC/ABS-Mischungen beschrieben, wobei die Pfropfhülle Alkylacrylate zusätzlich zu Styrol und Acrylnitril aufweist; außerdem weist die bekannte Formmasse übliche Flammschutzmittel und z.B. Sb$_2$O$_3$ als Synergist auf und ist somit bereits flammfest ausgerüstet.

Die aus (1) oder (2) bekannten Formmassen auf Basis von PC und ABS zeigen eine nichthomogene Verteilung der Weichphase und keine festen Bindenähte, bei insgesamt niedriger multiaxialer Schlagzähigkeit; die Massen aus (1) bis (6) besitzen keine flammhemmenden, selbstverlöschenden Eigenschaften.

Die Flammfestausrüstung thermoplastischer Kunststoffe mit Halogen enthaltenden organischen Verbindungen zusammen mit Metall oder Nichtmetall enthaltenden Verbindungen (Synergisten) ist an sich bekannt und z.B. in Vogel, "Flammfestmachen von Kunststoffen", Hüthig-Verlag (1966), Seiten 94 bis 102; Troitzsch, "Brandverhalten von Kunststoffen", Hanser-Verlag (1982), Seiten 1 bis 65 und Hirschler, "Developments in Polymer Stabilization", Band 5, Editor G.Scott, Applied Science Publishers, London (1982), Seiten 107 bis 151, beschrieben. Es ist ferner bekannt, daß auch Mischungen, bestehend aus Poly(carbonaten) und - schlagzäh modifizierten Styrolcopolymeren in dieser Weise flammfest ausgerüstet werden können - (vgl. DE-OS 30 02 662).

Es zeigt sich jedoch, daß die üblicherweise eingesetzten Mischungen gemäß (1) bis (6) zwar ·flammhemmend ausgerüstet werden können, daß dann aber die mechanischen und thermischen Eigenschaften der Blends darunter in nicht tolerierbarem Maße leiden.

Es ist ferner bekannt, daß durch den Einsatz mehrfach gepfropfter Poly(butadien)kautschuke mit Acrylsäureestern in der letzten Pfropfstufe ein entscheidender Fortschritt gegenüber dem Stand der Technik erzielt wird [vgl. (7)]. Dies betrifft zum einen die mechanischen, thermischen, rheologischen und selbstverlöschenden Eigenschaften der Blends aus Poly(carbonat) und ABS, und zum anderen wird die Auswahl an einsetzbaren Flammschutzmitteln breiter. Ein entscheidender Nachteil ist aber die zur Herstellung der Mischungen notwendige Zweifachpfropfung des Poly(butadien)-kautschuks, welche besonders aufwendig ist.

Es besteht daher immer noch die Aufgabe, eine befriedigende Flammfestausrüstung von Mischungen aus ABS und Polycarbonat vorzuschlagen, bei denen für die Erhaltung des mechanischen, thermischen und rheologischen Eigenschaftsprofils keine zusätzlichen Verfahrensmaßnahmen notwendig sind.

Diese Aufgabe wird durch die im Patentanspruch 1 beschriebene Formmasse gelöst.

Die Erfindung betrifft daher halogenhaltige thermoplastische Formmasse, enthaltend, jeweils bezogen auf die Formmasse aus A, B, C und D,

A 30 bis 80 Gew.% mindestens eines Polycarbonats,

B 70 bis 20 Gew.% mindestens eines Mischpolymerisats das besteht aus

b₁) mindestens einem Elastomeren (Kautschuk) auf Basis von ausschließlich Butadien in einem Anteil von 1 bis 40 Gew.%, bezogen auf B,

b₂) einer auf das Elastomer gepfropften Hülle, die 5 bis 40 Gew.%, bezogen auf B, ausmacht, sowie

b₃) mindestens einem Copolymerisat - (Hartmatrix), in einem Anteil von 20 bis 94 Gew.%, bezogen auf B,

C 5 bis 15 Gew.% mindestens einer Halogen enthaltenden organischen Verbindung - (Flammschutzmittel),

D 2 bis 10 Gew.% Antimonoxid (Synergist) dadurch gekennzeichnet, daß als Flammschutzmittel C Poly-(pentabrombenzylacrylat) mit einem Erweichungsbereich von 205 bis 215°C und als Synergist ein Konzentrat von Sb₂O₃ in Polyethylen angewendet wird.

Poly(pentabrombenzylacrylat) ist eine an sich bekannte Verbindung, deren Darstellung beispielsweise in SU-PS 732 281, BE-PS 860 173, DE-PS 2 527 802, DE-PS 2 920 085 und NL-OS 7 606 647 eingehend beschrieben wird. Das Produkt wird ferner von Eurobrom unter der Markenbezeichnung ®FR 1025 vertrieben. Eurobrom empfiehlt FR 1025 in seiner Firmenschrift als geeignet für den Einsatz als Flammschutzmittel in Poly(estern) und Poly-(amiden). Ferner ist in folgenden Druckschriften der Einsatz dieses und ähnlicher Flammschutzmittel in Polymeren beschrieben: J5 900 6248-A, GB-PS 2 105 351, BE-PS 875 377, DE-PS 3 234 589, GB-PS 2 098 231, DE-PS 2 943 535, DE-PS 2 527 803, BE-PS 860 173 und NL-OS 7 606 647.

Insbesondere in der BE-PS 860 173 und in der NL-Anmeldung 7 6066 47 werden Poly-(pentabrombenzylacrylat) und ähnliche Verbindungen als Flammschutzmittel für folgende Stoffgruppen vorgeschlagen: Poly(ester), ABS, Poly-(carbonate), Poly(acetale) oder Poly(urethane).

Es hat sich jedoch gezeigt, und Vergleichsversuche belegen dies, daß Poly-(pentabrombenzylacrylat) die Kerbschlagzähigkeit und die Bruchenergie gerade von ABS beträchtlich schädigt. Es ist daher überraschend, daß dieses Flammschutzmittel, ausgewählt aus einer Vielzahl von Halogen, insbesondere Brom, enthaltenden Verbindungen, in Mischungen aus ABS und Poly-(carbonat) nicht diese schädigende Wirkung aufweist. Dies ist umso mehr überraschend, als andere Flammschutzmittel, welche die mechanischen Eigenschaften von ABS nicht schädigen, gerade dies bei Mischungen aus ABS und Poly-(carbonaten) tun. Auch dies wird durch Vergleichsversuche belegt. Der Vorschlag, gerade Poly-(pentabrombenzylacrylat) für die Flammfestausrüstung von Mischungen aus ABS ud PC zu verwenden, war daher nicht naheliegend. Es kommt noch folgendes hinzu:

Die erfindungsgemäße Formmasse enthält ferner Sb₂O₃ in Form eines an sich bekannten 90 %igen Konzentrates in Poly(ethylen). Poly(ethylen) ist nun bekanntermaßen mit ABS und mit Poly-(carbonat) unverträglich. Es war daher zu befürchten, daß der Einsatz dieses Konzentrates die Eigenschaften der Mischung verschlechtert.

Nachstehend wird der Aufbau der erfindungsgemäßen Formmasse aus den Komponenten A bis D, deren Art bzw. Herstellung und die Herstellung der Formmasse beschrieben.

Die erfindungsgemäße Formmasse enthält bzw. besteht vorzugsweise aus, bezogen auf die Summe der Komponenten A bis D,

A 30 bis 80 Gew.%, vorzugsweise 40 bis 60 Gew.%

B 70 bis 20 Gew.%, vorzugsweise 30 bis 50 Gew.%

C 15 bis 5 Gew.%, vorzugsweise 10 bis 6 Gew.%

D 10 bis 2 Gew.%, vorzugsweise 2 bis 7 Gew.%.

Ferner kann die Formmasse noch übliche Zusatzstoffe (E) in Mengen von jeweils 0,1 bis 0,5 Gew.-Teilen, bezogen auf 100 Gew.-Teile der Formmasse aus A, B, C und D, aufweisen. Die Art und Menge der Zusatzstoffe ist insbesondere vom Verwendungszweck der Formmasse bzw. den Verarbeitungsbedingungen abhängig.

Komponente A

Unter Polycarbonaten A im Sinne der erfindungsgemäßen Formmasse sollen Polycarbonate auf der Basis von Homopolycarbonaten und Copolycarbonaten verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H.Schnell, Chemistry and Physics of Polycarbonates, Interscience Publishers, New York, 1964, in der US-PS 2 999 835 und in der DE-OS 22 48 817 beschrieben sind. Besonders bevorzugt sind Polycarbonate auf der Basis von 2,2-Bis-(4-hydroxyphenyl)propan. Die Synthese der Polycarbonate wird beispielsweise in der US-PS 2 999 835 und der GB-PS 772 627 beschrieben. Die Komponente A weist relative Viskositäten $\eta$spec/c im Bereich von 1,1 bis 1,5$\beta$[ml/g] auf, entsprechend mittleren Molgewichten $\overline{M}_n$ im Bereich von 25.000 bis 200.000.

Komponente B

Besonders bevorzugt am Aufbau der Komponente B sind Copolymerisate von Styrol und Acrylnitril sowie Pfropfmischpolymerisate von Styrol und Acrylnitril und Kautschuk, insbesondere Polybutadien, beteiligt.

Der Aufbau der Komponente B der Formmasse ist bevorzugt dreiteilig. Die Komponente B der erfindungsgemäße Formmasse weist als Komponente $b_1$ ein Elastomeres in einem Anteil von 1 bis 40 Gew.%, insbesondere von 10 bis 30 Gew.%, jeweils bezogen auf B, auf. Auf diesem Elastomeren, d.h. einem Kautschuk, der eine Glastemperatur unterhalb von 0°C, insbesondere unterhalb von -30°C aufweist, ist ein Copolymerisat $b_2$ aufgepfropft, das einen Anteil von 5 bis 40 Gew.%, insbesondere von 5 bis 30 Gew.%, jeweils bezogen auf B, ausmacht. Die Summe aus $b_1$ und $b_2$, im nachfolgenden Text auch gelegentlich als Pfropfmischpolymerisat, d.h. als Ergebnis der Pfropfung bezeichnet, macht noch nicht die gesamte Komponente B aus. Die Komponente B enthält zusätzlich zu den Komponenten $b_1$ und $b_2$ noch mindestens

ein Copolymerisat $b_3$ (Hartmatrix) in einem Anteil von 20 bis 94 Gew.%, insbesondere von 40 bis 85 Gew.%, jeweils bezogen auf B. Dieses Copolymerisat stellt die Hartmatrix der Formmasse dar, in der das Pfropfmischpolymerisat gleichmäßig verteilt ist.

Nachstehend wird der Aufbau der Komponente $b_1$ bis $b_3$ des Mischpolymerisates B beschrieben.

Aufbau von b1)

Das Elastomere $b_1$) ist aufgebaut aus Polymerisaten konjugierter Diene, insbesondere von Butadien-1,3. Es soll eine Glastemperatur (nach K.H.Illers und H.Breuer, Kolloid-Zeitschrift 176 - (1961), Seite 110) haben, die unter 0°C liegt.

Aufbau von b2)

Das Copolymerisat $b_2$), d.h. die Pfropfhülle, ist aufgebaut aus mindestens je einem Monemeren aus zwei unterschiedlichen Gruppen.

Die erste Gruppe stellt vinylaromatische Monomere mit 8 bis 9 C-Atomen dar, insbesondere kommen hierbei in Betracht das Styrol sowie die Alkyl-derivate, von denen das $\alpha$-Methylstyrol bzw. p-Methylstyrol hervorgehoben seien. Besonders bevorzugt wird das Styrol allein angewendet. Um wärmeformbeständigere Massen zu erhalten, können Mischungen aus Styrol und dessen Alkyl-derivaten oder ausschließlich das $\alpha$-Methylstyrol und insbeondere das p-Methylstyrol angewendet werden.

Die zweite komponente für den Aufbau des Copolymerisates $b_2$) stellt ein (nichtaromatisches) ethylenisch ungesättigtes Monomers dar. Als solche (nichtaromatische) ethylenisch ungesättigte Monomere kommen in Betracht, insbesondere die Derivate der Acrylsäure und Methacrylsäure. Genannt seien die Ester der Acrylsäure und der Methacrylsäure mit 1 bis 8 C-Atomen im Alkylrest sowie das Acrylnitril und das Methacrylnitril. Bevorzugt wird das Acrylnitril verwendet. Die vorstehend genannten vinylaromatischen Monomeren und die -(nichtaromatischen) ethylenisch ungesättigten Monomeren werden im Gewichtsverhältnis von 60:40 bis 90:10 angewendet. Bei der Herstellung des Copolymerisates in Gegenwart des Elastomeren $b_1$) resultiert ein Pfropfmischpolymerisat, bei der ein Copolymerisat in dem Fachmann bekannten Grenzen auf das Elastomere gepfropft wird. Die Herstellung der Pfropfhülle erfolgt in nur einer Stufe.

Das Copolymerisat $b_2$) enthält unabhängig von der Art der Herstellung etwa 90 bis 60 Gew.$ vinylaromatische Monomere und 40 bis 10 Gew.% (nichtaromatische) ethylenisch ungesättigte Monomere, jeweils bezogen auf $b_2$). Bevorzugt ist die Pfropfhülle aus 80 bis 65 Gew.% Styrol und 20 bis 35 Gew.% Acrylnitril aufgebaut.

Sowohl das Elastomere als auch das Pfropfmischpolymerisat werden bevorzugt in Emulsion hergestellt und können nach den üblichen Methoden einer Teilchenvergrößerung unterzogen werden. Das Pfropfmischpolymerisat soll Teilchen im Bereich von 0,2 bis 10μm ($d_{50}$)-Wert der integralen Masseverteilung) aufweisen.

Als Pfropfmischpolymerisat($b_1$ + $b_2$) kommen somit z.B. in Frage:

1. 75% Polybutadienkautschuk gepropft mit

25% Styrol/Acrylnitril im Verhältnis 90/10)

2. 75% Polybutadienkautschuk gepfropft mit 25% Styrol/Acrylnitril im Verhältnis (83/17)

3. 75% Polybutadienkautschuk gepfropft mit 25% Styrol/Acrylnitril im Verhältnis (75/25)

4. 75% Polybutadienkautschuk gepfropft mit 25% Styrol/Acrylnitril im Verhältnis (70/30)

5. 60% Polybutadienkautschuk gepfropft mit 40% Styrol/Acrylnitril im Verhältnis 65/35).
Besonders bevorzugt eingesetzt wird 5.

In den erfindungsgemäßen Formmassen besonders bevorzugt eingesetzte Mischungen aus Komponentenb $b_3$) und ($b_1$ + $b_2$) sind demnach Acrylnitril-Butadien-Styrol-Copolymerisate (ABS).

Aufbau von $b_3$)

Die Komponente $b_3$), das Copolymerisat, ist eine nicht elastomere Hartkomponenete, die aus mindestens einem vinylaromatischen Monomeren mit 8 bis 9 C-Atomen und mindestens einem - (nichtaromatischen) ethylenisch ungesättigten Monomeren aufgebaut ist.

Als vinylaromatische Monomere, die in einer Menge von 50 bis 90 Gew.%, insbesondere von 65 bis 80 Gew.%, bezogen auf $b_3$), angewendet werden, kommen in Betracht: Styrol und seine Derivate, insbesondere die Alkyl-derivate, wie α-Methylstyrol und p-Methylstyrol. Bevorzugt werden das Styrol allein und, falls wärmeformbeständigere Formmassen angestrebt werden, dessen Alkylderivate angewendet.

Das nicht aromatische ethylenisch ungesättigte Monomere wird in einer Menge von 50 bis 10 Gew.%, insbesondere von 35 bis 20 Gew.%, bezogen auf $b_3$), angewendet. Als Monomere kommen in Betracht die Derivate der Acryl-und Methacrylsäure, insbesondere die Ester von Alkoholen mit 1 bis 8 C-Atomen im Alkylrest, sowie die Nitrile. Das Acrylnitril ist bevorzugt.

Besonders bevorzugt werden somit S/AN-Copolymerisate in den genannten Grenzen der Zusammensetzung.

Die bevorzugt als $b_3$) verwendeten Styrol/Acrylnitril-Copolymerisate sind im Handel erhältlich und können z.B. nach der Lehre der DE-AS 10 01 001 bzw. DE-PS 10 03 436 hergestellt werden. Der Molekulargewichtsbereich der Copolymerisate kann $\overline{M}_w = 10^5$ bis $\overline{M}_w = 2,5 \times 10^5$ (Gewichtsmittel $\overline{M}_w$ aus Lichtstreuung) betragen.

Die Herstellung des Pfropfmischpolymerisates ist an sich bekannt.

Auch das Pfropfmischpolymerisat($b_1$ + $b_2$) ist im Handel erhältlich oder es kann beispielsweise nach der in der DE-PS 12 60 135 beschriebenen Methode hergestellt werden.

In den erfindungsgemäßen Formmassen beträgt das Gewichtsverhältnis $b_3$ : ($b_1$ + $b_2$) = 40:60 bis 60:40, vorzugsweise aber 50:50.

Komponente C

Als Flammschutzmittel wird aus der Vielzahl der auf dem Markt erhältlichen Brom-Verbindungen das Poly(pentabrombenzylacrylat) ausgewählt. Es weist folgende Spezifikation auf: Erweichungsbereich 205 bis 215°C; Bromgehalt 70 bis 71 Gew.%. Ein Polymerisationsgrad ist wegen der schlechten Löslichkeit nicht bekannt. Eingesetzt wird ®FR 1025 von Eurobrom.

Komponente D

Als Synergist wird $Sb_2O_3$ in Form eines an sich bekannten ungefähr 90 %igen Konzentrates in Poly(ethylen) eingesetzt. Das Poly(ethylen) weist folgende Spezifikation auf: Melt flow index "MFI" bei 190°C mit einer Auflagekraft von 21,6kp, 20g/10min; Molgewicht $\overline{M}_w$ 190.000 (bestimmt durch die Gelpermeationschromatographie). Unter Konzentrat im Sinne der vorliegenden Erfindung wird die Dispersion von $Sb_2O_3$-Pulver in PE verstanden, wobei 75 bis 95 Gew.%, insbesondere 85 bis 92 Gew.% $Sb_2O_3$ vorliegen.

Komponente E

Die erfindungsgemäße Formmasse kann ferner übliche Zusatzstoffe enthalten (Komponente E). Als Zusatzstoffe kommen bekannte und bewährte Stabilisatoren wie sterisch gehinderte Phenole und organische Phosphite in Betracht.

Ferner können Schwefel und/oder Schwefel enthaltende Antioxidantien wie Dithiocarbamatkomplexe, Xanthogensäuresalze, Thiazole und Zinksalze von Mercaptobenzimidazolen in üblichen Mengen von jeweils 0,01 bis 0,5 Gew.-Teilen, bezogen auf 100 Gew.-Teile der Formmasse aus A + B + C + D, eingesetzt werden.

Ferner sind anwendbar Füllstoffe, Farbpigmente, Gleitmittel, Weichmacher, Antistatika oder Treibmittel, weitere metallfreie Synergisten wie Triphenylphosphat, Triphenylphosphinoxid in üblichen, dem Fachmann bekannten Mengen.

Besonders bevorzugt eingesetzt werden Phthalsäureester wie ®Pluriol PE 3100 (E,> und Tris-(nonylphenyl)phosphit (TNPP) ($E_2$).

Herstellung der erfindungsgemäßen Formmasse

Das Mischen der Komponenten A, B, C, D und gegebenenfalls E der erfindungsgemäßen Formmasse kann nach allen bekannten Methoden erfolgen. Vorzugsweise geschieht jedoch das Mischen der Komponenten A, B, C, D und gegebenenfalls E durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation ßKomponente ($b_1$ + $b_2$)' können aber auch teilweise entwässert oder direkt als Dispersion mit der Komponente $b_3$) und dann mit den Komponenten A, C, D und gegebenenfalls E vermischt werden, wobei dann während des Vermischens die vollständige Trocknung des Pfropfmischpolymerisates ($b_1$ + $b_2$) erfolgt.

Eine bevorzugte Herstellung der erfindungsgemäßen Formmasse erfolgt z.B. dadurch, daß eine Schmelze des Polycarbonats (Komponente A) mit der Komponente B bei Temperaturen über 200°C intensiv vermischt wird. Sie kann auch dadurch erfolgen, daß man eine Schmelze der Polymerisate A mit einem gefällten Pfropfmischpolymerisat ($b_1$ + $b_2$), das einen Restwassergehalt von 10 bis 40 Gew.% aufweist, bei Temperaturen über 180°C intensiv vermischt, oder daß man die Schmelze mit einer Dispersion des Pfropfkautschuks($b_1$ + $b_2$), die ein Feststoffgehalt von 40 bis 70 Gew.% aufweist, bei Temperaturen über 180°C intensiv vermischt und wobei jeweils anschließend die Komponenten $b_3$), C, D und gegebenenfallsE beigegeben werden.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern; besonders bevorzugt werden aus den nach dem erfindungsgemäßen Verfahren hergestellten Formmassen Formteile durch Spritzgießen für den Automobilbau hergestellt.

Es hat sich überraschenderweise gezeigt, daß die erfindungsgemäße Formmasse zusätzlich zu guten Verarbeitungseigenschaften ausgezeichnete Kerbschlagzähigkeiten und eine gute Festigkeit bei der multiaxialen Schlagbeanspruchung - (Fallrohrtest), eine hohe Wärmeformbeständigkeit und selbstverlöschende Eigenschaften aufweist.

Es zeigt sich auch, daß die Schlagzähigkeit nach Bewitterung auf einem hohen Endniveau verbleibt und die Formmassen danach trotz Bewitterungsschädigung keinen Bruch aufweisen. Ferner weisen die Verarbeitungsmaschinen keine Formbeläge auf.

Die in der vorliegenden Anmeldung beschriebenen Parameter wurden wie folgt bestimmt:

1. die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W.Scholtan und H.Lange, Kolloid-Z, und Z.-Polymere 250 (1972), Seiten 82 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur Charakte-

risierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$-und $d_{90}$-Werte herangezogen. Der d bzw. $d_{90}$-Wert der integralen Massenverteilung ist dabei entsprechend dem $d_{50}$-Wert definiert mit dem Unterschied, daß sie auf 10 bzw. 90 Gew.% der Teilchen bezogen sind. Der Quotient

$$\frac{d_{90} - d_{10}}{d_{50}} = Q$$

stellt ein Maß für die Verteilungsbreite der Teilchengröße dar.

2. Die Kerbschlagzähigkeit $a_k$ in [kJ/m²] wurde nach DIN 53 453 an bei 250°C gespritzten Normkleinstäben bei 23°C gemessen. Die Schlagzähigkeiten von Vergleichsproben und von Proben erfindungsgemäßer Formmassen sind in der Tabelle zusammengefaßt.

3. Die Bruchenergie $E_{Br}$ in [Nm] wurde mit Hilfe des Fallrohrtestes nach DIN 53 443 an bei 250°C gespritzten Rundscheiben bei 23°C bestimmt.

4. Die Molgewichtsbestimmung der Polycarbonate erfolgt aufgrund der Messung der relativen Viskosität in 0,5%iger Methylenchloridlösung bei 23°C.

5. Die Wärmeformbeständigkeit nach Vicat - [in °C] wurde gemäß DIN 53 460 bestimmt.

6. Die Flammschutzprüfung erfolgt im vertikalen Brandtest nach den Vorschriften der Underwriter Laboratories zwecks Einordnung in eine der Brandklassen UL 94 V0, V1 oder V2.

Die Einstufung eines flammgeschützten Thermoplasten in die Brandklasse UL 94 V0 erfolgt, wenn folgende Kriterien erfüllt sind: Bei einem Satz von 5Proben der Abmessungen 127 $^x$ 12,7 $^x$ 3, 16mm dürfen alle Proben nach zweimaliger nach zweimaliger Beflammung von 10 sek Zeitdauer mit einer offenen Flamme (Höhe 19mm) nicht länger als 10 sek nachbrennen. Die Summe der Nachbrennzeiten bei 10 Beflammungen von 5 Proben darf nicht größer sein als 50 sek. Es darf kein brennendes Abtropfen, vollständiges Abbrennen oder ein Nachglühen von länger als 30 sek erfolgen. Die Einstufung in die Brandklasse UL 94 V1 erfordert, daß die Nachbrennzeiten nicht länger als 30 sek sind und daß die Summe der Nachbrennzeiten von 10 Beflammungen von 5 Proben nicht größer als 250 sek ist. Das Nachglühen darf nie länger als 60 sek dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

Zur Durchführung der in den Beispielen beschriebenen Versuche und von Vergleichsversuchen wurden die nachfolgend beschriebenen Stoffe eingesetzt:

I. Als Komponente A wurde ein im Handel erhältliches Polycarbonat auf der Basis von 2,2-Bis-(4-hydroxiphenyl)propan , mit einer Grenzviskosität von 0,55 [dl/g] eingesetzt.

II. Herstellung des Mischpolymerisates ABS (Komponente B):

a) Herstellung des Pfropfmischpolymerisates($b_1$ + $b_2$) Durch Polymerisation von 60 Teilen Butadien in Gegenwart einer Lösung von 0,5 Teilen tert.-Dodecylmercaptan, 0,7 Teilen Kalium-$C_{14}$-$C_{18}$-Alkylsulfonat als Emulgator, 0,2 Teilen Kaliumperoxidsulfat und 0,2 Teilen Natriumpyrophosphat in 80 Teilen Wasser wird bei 65°C ein Polybutadien-Latex hergestellt. Nach Beendigung der Polymerisation wird der Polymerisations-Autoklav entspannt. Der Umsatz betrug 98%.

Es wurde ein Polybutadien-Latex erhalten, dessen mittlere Teilchengröße bei 0,1 μm liegt. Dieser Latex wird durch Zusatz von 25 Teilen einer Emulsion eines Copolymeren aus 96 Teilen Ethylacrylat und 4 Teilen Acrylsäureamid mit einem Feststoffgehalt von 10 Gew.% agglomeriert, wobei ein Polybutadien-Latex mit einer mittleren Teilchengröße von 0,3 bis 0,4 μm entstand ($b_1$).

60 Teile des Polybutadien-Latex $b_1$) wurde

mit 40 Teilen einer Mischung aus Styrol und Acrylnitril (Verhältnis 65:35) in Wasserdispersion radikalisch gepfropft und bei 95°C aus der Dispersion mit Kalziumchlorid-Lösung gefällt, mit Wasser gewaschen und im warmen Luftstrom getrocknet.

Als Komponente $b_3$) (Hartmatrix) wurde ein handelsübliches Styrol/Acrylnitril (65/35)-Copolymerisat mit einer Viskositätszahl VZ = 80 ml/g (0,5%ig in Dimethylformamid) eingesetzt. Bezogen auf B wurden 50 Teile des Pfropfmischpolymerisats und 50 Teile der Hartmatrix angewendet.

III. Als Komponenten C, D und E wurden die in der Beschreibung genannten Produkte Poly(pentabrombenzylacrylat) [= (C)], $Sb_2O_3$, 90 %ig in Poly(ethylen) [= (D)] und die Produkte ($E_1$) und ($E_2$) angewendet.
Für Vergleichsversuche wurden eingesetzt:

IV. Ein zweifach gepfropfter Poly(butadien)-Kautschuk der Lehre von (7) der Zusammensetzung: 60 Teile Poly(butadien), 35 Teile Styrol/Acrylnitril (70/30) (1. Pfropfstufe) und 5 Teile Poly(methylmethacrylat) (2. Pfropfstufe).

V. BC 52, ein bromiertes Oligo(carbonat) von Great Lakes mit einem Bromgehalt von 52 Gew.%, bezogen auf BC 52.

VI. BC 58, ein bromiertes Oligo(carbonat) von Great Lakes mit einem Bromgehalt von 58 Gew.%, bezogen auf BC 52.

VII. $Sb_2O_3$, 75 %ig in Styrol/Acrylnitril -(65/35)-Copolymer (Viskositätszahl VZ = 80 ml/g, 0,5%ig in Dimethylformamid.

VIII. Poly(methylmethacrylat), ®Degalan P 7 von Degussa.

Beispiele 1 und 2 und Vergleichsversuche A bis L

Die in der Tabelle angegebenen Teile der Komponenten A bis E wurden auf einem Mischextruder bei 260°C aufgeschmolzen, gemischt und anschießend granuliert.
Aus den Mischungen wurden bei 250°C mittels einer Spritzgußmaschine Prüfkörper hergestellt, an denen die in der Tabelle genannten Prüfungen durchgeführt wurden.

In der Tabelle werden folgende Abkürzungen verwendet:

A = Poly(carbonat)

B = ABS (Mischpolymerisat)

$b_1$ = Grundkautschuk [Poly(butadien)]

$(b_1 + b_2)$ = Pfropfmischpolymerisat [gepfropftes Poly(butadien)]

$b_3$ = Hartmatrix (SAN)

C = Poly(pentabrombenzylacrylat)

D = $Sb_2O_3$, 90%ig in Poly(ethylen)

$E_1$ = Pluriol PE 3100

$E_2$ = Tris(nonylphenyl)phosphit

$B_1$ = Mischpolymerisat aus 50 Teilen Styrol/Acrylnitril (65/35)-Copolymer (VZ = 80ml/g, 0,5 %ig in Dimethylformamid) und 50 Teilen zweifach gepfropfter Kautschuk (Zusammensetzung unter Punkt IV)

$C_1$ = BC 52 non Great Lakes

$C_2$ = BC 58 von Great Lakes

$D_1$ = $Sb_2O_3$, 75 %ig in Styrol/Acrylnitril (65/35)-Copolymer (VZ = 80 ml/g, 0,5 %ig in Dimethylformamid)

$E_3$ = Irganox PS 800 von Ciba Geigy

$E_4$ = Topanol CA von ICI

Z. = Zähbruch

S. = Sprödbruch

Z.O. = Zäh-Orientierungsbruch

PMMA = Degalan P 7 von Degussa

Die Angaben bezüglich der Komponenten A, B, C und D in der Tabelle sind in Gew.%, jeweils bezogen auf die Gesamtmenge aus A + B + C + D, angegeben. Die Angaben bezüglich der Komponente E bezieht sich stets auf Gew.-Teile an E pro 100 Gew.-Teile aus A + B + C + D.

0 199 334

Tabelle: Beispiele und Vergleichsversuche

| Beispiel | Zusammensetzung in Gew.% Komponenten | | | | | | | | |
|---|---|---|---|---|---|---|---|---|---|
| | A | B | davon | | | C | D | E | |
| | | | $b_1$ | $(b_1+b_2)$ | $b_3$ | | | | |
| 1 | 53,28 | 35,52 | 10,66 | 7,1 | 17,76 | 7 | 3,5 | $E_1$:0,5 | $E_2$:0,2 |
| 2 | 52,38 | 34,42 | 10,48 | 6,78 | 17,46 | 8 | 4 | $E_1$:0,5 | $E_2$:0,2 |

Vergleichsversuche

| | A | B | $b_1$ | $(b_1+b_2)$ | $b_3$ | C | D | E | |
|---|---|---|---|---|---|---|---|---|---|
| A | – | 80 | 24 | 16 | 40 | 15 | 4,7 | $E_3$:0,2 | $E_4$:0,1 |
| B | – | 79,15 | 23,74 | 15,83 | 39,57 | $C_2$:15,67 | 4,94 | $E_3$:0,16 | $E_4$:0,08 |
| C | – | 75,92 | 22,78 | 15,18 | 37,96 | $C_1$:18 | 5,84 | $E_3$:0,16 | $E_4$:0,08 |
| D | 52,86 | 35,24 | 10,57 | 7,05 | 17,62 | $C_2$: 7  $D_1$:4,2 | | $E_1$:0,5 | $E_2$:0,2 |
| E | 49,68 | 33,12 | 9,94 | 5,62 | 16,56 | $C_1$:11,5 | 5 | $E_1$:0,5 | $E_2$:0,2 |
| F | 49,68 | 33,12 | 9,94 | 6,64 | 16,72 | $C_1$:11  $D_1$:4,7 | | $E_1$:0,5 | $E_2$:0,2 |
| G | 49,68 | $B_1$:33,12 | ——————————— | | | $C_1$:11,5 | 5 | $E_1$:0,5 | $E_2$:0,2 |
| H | 49,68 | 35,92 | ——————————— | | | $C_2$:11,5 | 5 | $E_1$:0,5 | $E_2$:0,2 |
| I | 49,38 | 35,92 | 9,88 | 6,58 | 16,46 | $C_1$:11,5 $D_1$:5,5 | | $E_1$:0,5 | $E_2$:0,2 |
| J | 49,38 | 35,92 | 9,88 | 6,58 | 16,46 | $C_2$:11,5 $D_1$:5,5 | | $E_1$:0,5 | $E_2$:0,2 |
| K | 48,78 | $B_1$:35,52 PMMA: 3 | ——————————— | | | $C_1$:10 | 5 | $E_1$:0,5 | $E_2$:0,2 |
| L | 48,78 | $B_1$:35,52 PMMA:3 | ——————————— | | | $C_2$:10 | 5 | $E_1$:0,5 | $E_2$:0,2 |

Tabelle: Fortsetzung

| Beispiel | UL 94 | | Wärmeform-beständigkeit nach Vicat (°C) | $a_k$ bei 23°C (kJ/m²) | $E_{Br}$ | |
|---|---|---|---|---|---|---|
| | 1" 8 | 1" 16 | | | (Nm) | Bruch-art |
| 1 | VO | VO | 121 | 45 | 50 | Z. |
| 2 | VO | VO | 120 | 42 | 70 | Z. |
| **Vergleichs-versuche** | | | | | | |
| A | VO | VO | 101 | 1,23 | 0,22 | S. |
| B | V1 | V1 | 103 | 2 | 0,68 | Z.O. |
| C | VO | V2 | 103 | 2 | 0,5 | Z.O. |
| D | VO | V2 | 117 | 6 | 25 | Z.O. |
| E | VO | V2 | 117 | 4 | 30 | Z. |
| F | VO | V2 | 116 | 7 | 15 | Z.O. |
| G | VO | VO | 117 | 25 | 40 | Z. |
| H | VO | VO | 119 | 28 | 38 | Z.O. |
| I | VO | VO | 118 | 3 | 24 | Z.O. |
| J | VO | V2 | 119 | 1 | 10 | Z.O. |
| K | VO | VO | 119 | 32 | 41 | Z. |
| L | VO | VO | 118 | 30 | 38 | Z. |

Ansprüche

1. Selbstverlöschende halogenhaltige thermoplastische Formmasse, enthaltend, jeweils bezogen auf die Formmasse aus A, B, C und D,

A 30 bis 80 Gew.% mindestens eines Polycarbonats,

B 70 bis 20 Gew.% mindestens eines Mischpolymerisats das besteht aus

$b_1$) mindestens einem Elastomeren (Kautschuk) auf Basis von ausschließlich Butadien in einem Anteil von 1 bis 40 Gew.%, bezogen auf B,

$b_2$) einer auf das Elastomere gepfropften Hülle, die 5 bis 40 Gew.%, bezogen auf B, ausmacht, sowie

$b_3$) mindestens einem Copolymerisat (Hartmatrix), in einem Anteil von 20 bis 94 Gew.%, bezogen auf B,

C 5 bis 15 Gew.% mindestens einer halogenhaltigen organischen Verbindung (Flammschutzmittel),

D 2 bis 10 Gew.% Antimonoxid (Synergist)

dadurch gekennzeichnet, daß als Flammschutzmittel C Poly(pentabrombenzylacrylat) mit einem Erweichungsbereich von 205 bis 215°C und als Synergist ein Konzentrat von $Sb_2O_3$ in Polyethylen angewendet wird.

2. Selbstverlöschende halogenhaltige thermoplastische Formmasse, enthaltend, jeweils bezogen auf die Formmasse aus A, B, C und D,

A 30 bis 80 Gew.% mindestens eines Polycarbonats,

B 70 bis 20 Gew.% mindestens eines Mischpolymerisats das besteht aus

$b_1$) mindestens einem Elastomeren (Kautschuk) auf Basis von ausschließlich Butadien in einem Anteil von 1 bis 40 Gew.%, bezogen auf B,

$b_2$) einer auf das Elastomer gepfropften, in höchstens einem Verfahrensschritt hergestellten Hülle, die 5 bis 40 Gew.%, bezogen auf B, ausmacht, und die Styrol und Acrylnitril im Gewichtsverhältnis 90:10 bis 60:40 einpolymerisiert enthält,

sowie

$b_3$) mindestens einem Copolymerisat - (Hartmatrix), in einem Anteil von 20 bis 94 Gew.%, bezogen auf B, das zu 50 bis 90 Gew.% aus Styrol und 50 bis 10 Gew.% aus Acrylnitril besteht,

C 5 bis 15 Gew.% mindestens einer Brom enthaltenden organischen Verbindung (Flammschutzmittel),

D 2 bis 10 Gew.% Antimonoxid (Synergist)

dadurch gekennzeichnet, daß als Flammschutzmittel C Poly(pentabrombenzylacrylat) mit einem Erweichungsbereich von 205 bis 215°C und als Synergist ein übliches Konzentrat von $Sb_2O_3$ in Polyethylen angewendet wird.

3. Selbstverlöschende halogenhaltige thermoplastische Formmasse, bestehend aus, jeweils bezogen auf die Formmasse aus A, B, C und D,

A 40 bis 60 Gew.% mindestens eines Polycarbonats,

B 30 bis 50 Gew.% mindestens eines Mischpolymerisats auf Basis von ABS, das besteht aus

$b_1$) mindestens einem Elastomeren (Kautschuk) auf Basis von ausschließlich Butadien in einem Anteil von 10 bis 30 Gew.%, bezogen auf B,

$b_2$) einer auf das Elastomere gepfropften, in höchstens einem Verfahrensschritt erzeugten Hülle, die 5 bis 30 Gew.%, bezogen auf B, ausmacht, und die Styrol und Acrylnitril im Gewichtsverhältnis 80:20 bis 60:40 einpolymerisiert enthält,

sowie

$b_3$) mindestens einem Copolymerisat - (Hartmatrix), in einem Anteil von 40 bis 85 Gew.%, bezogen auf B,

C 5 bis 15 Gew.% mindestens einer Brom enthaltenden organischen Verbindung (Flammschutzmittel),

D 2 bis 10 Gew.% Antimonoxid (Synergist)

dadurch gekennzeichnet, daß als Flammschutzmittel C Poly(pentabrombenzylacrylat) mit einem Erweichungsbereich von 205 bis 215°C und als Synergist ein übliches Konzentrat von $Sb_2O_3$ in Polyethylen angewendet wird.

4. Formmasse nach Anspruch 1, dadurch gekennzeichnet, daß sie übliche Zusatzstoffe E aufweist.

5. Verwendung einer Formmasse gemäß Anspruch 1 zur Herstellung von Formteilen.

6. Formteile aus einer Formmasse gemäß Anspruch 1.